# EUROPEAN PATENT APPLICATION

(11) **EP 1 471 447 A2**
(43) Date of publication of application: **27.10.2004**
(21) Application number: 04101333.5
(22) Date of filing: 31.03.2004
(51) Int. Cl.: G06F 17/30, G06F 17/60

(54) **Data Storage Management**

(30) Priority: 31.03.2003 US 458415 P; 23.12.2003 US 742832; 31.03.2003 US 458425 P; 23.12.2003 US 742793
(71) Applicant: SAP Aktiengesellschaft, 69190 Walldorf (DE)
(72) Inventor: Heinzel, Thomas, San Francisco, CA 94117 (US); Mayer, Thomas, 69181 Leimen (DE); Foerster, Stefan, 68766 Hockenheim (DE)
(74) Representative: Schneider, Günther M., Dr.-Ing.

(57) **Abstract**

The invention provides methods and apparatus, including computer program products, for storing data in a database, wherein the data, whose structures are configurable, comprise a time series, the time series comprising a set of key figure values of individual time periods, the key figure values being associated with a combination of parameter values, wherein the set of key figure values is organized in a number of configurable clusters. Further, a method of managing order document data, the order document data being represented as an object, the object being configurable so as to comprise a predetermined number of core components, the core components being configurable in their content, and being hierarchically ordered in a corresponding number of levels.

## Description

This application relates to data storage management, in particular to a generic module to store and retrieve time series data, and to order document data management, that is developed for high performance and high volume scenarios of supply chain management (SCM) and planning.

A time series is defined as a list of key figure values for consecutive time periods that is attached to a combination of parameter values (characteristics). The characteristics, the key figure name and the time period form a semantic key to identify a single key figure value.

Such a time series may be the number of items sold per time interval. The time interval may be a day, a week, two months, etc... Parameters may be attached to the time series for characterizing the time series, for example denoting the store, or the item concerned.

Another example of time series is meteorological data, useful for weather forecast. Yet another example is control and measurement data of a complex chemical production plant.

The simplest way of storing time series data in a data base table follows from the definition of the time series: the key is formed by the parameter values and the time period and an attribute stores the time series value.

A problem arises when a time series among a large amount of data is to be accessed in a data base. Then, a straight-forward storing of data relating to time series is not longer the method of favor.

A similar problem exists in systems for managing order document data. In logistics, many different kinds of orders must be stored, processed, and transmitted from and to many different locations. Current techniques model orders as hard-configured data objects. Such objects cannot easily be adapted to particular types of orders. For each other type of order, an individual object must be programmed in form of program code. Further in industrial applications, the data representing such orders has been stored independently of any content in data bases. Therefore, accessing to the data may be lengthy when the data is stored on an order which is not adapted to the kind of data.

It is an object of the present invention to provide methods of storing data in a data base, which is designed for high volume and high throughput scenarios.

According to the invention, this object is achieved by the methods of the independent claims.

In one aspect of the invention, a method of storing data in a database is provided, wherein the data, whose structures are configurable, comprise a time series, the time series comprising a set of key figure values of individual time periods, the key figure values being associated with a combination of parameter values, wherein the set of key figure values is organized in a number of configurable clusters, whereby the clusters may be configured according to time aggregates, each time aggregate comprising a number of the individual time periods, respectively.

Advantageous implementations can include one or more of the following features.

Values for many time periods may be stored into adjacent fields of one entry.

Such a clustering leads to enhanced performance for data read and write operations.

The numbers of individual time periods may be selected according to semantic criteria.

Data which is related to each other may be placed at the same location.

Alternatively, the numbers of individual time periods may be selected according to numeric criteria.

Each time period may have the same fixed length. Alternatively, each time period may be individually described by begin and end time.

In a further embodiment of the invention, the time series data is partitioned across a plurality of areas, each time series data area comprising a set of tables used for managing a partition of the data.

Data separation into data areas with these tables leads to smaller tables and to a better performance.

Additionally according to the invention, pointers to predefined documents of a document management service may be stored in relation to time series data.

A further embodiment of the invention comprises to log changes to key figure values in predefined tables, these tables again being organized to support clustering and data separation into multiple data areas.

Further provided is a method of storing order document data in a data base, the order document data being coded as objects, each object being configurable so as to comprise a predetermined number of core components and a number of extensions,
the core components being configurable in their content, and being hierarchically ordered in a corresponding number of levels,
the core components being coded to comprise a header, at least one item and at least one schedule line, the header comprising central information about an order, and
the number of levels being at least 3, on the 1^{st} level being the header comprising business partner information, on the 2^{nd} level being the item comprising product information, on the 3^{rd} level being schedule line comprising order quantities and time stamp information.

Herein, an extension may be assigned to a core component, and comprise addi-tional information relating to the component.

The information comprised in an extension may be orga nized in several parts, each part being linked with the corresponding core component.

The configuration may be performed in a modular way on the basis of core components and extensions.

Further provided is a method of managing a data base for an industrial applica-tion,
the data being organized into business objects, wherein
the data is split into groups according to a configurable set of conditions, the conditions being based on semantic properties of the business objects, and
each of the groups of data is stored in a set of tables of the data base which is associated with a condition of the set of conditions.

Herein, the set of conditions may be based on the way how the business objects are accessed by an industrial application.

Advantageously, the set of conditions may be organized in a decision tree.

The method may be performed in a hidden manner to the industrial application.

In particular, the invention comprises also computer systems for performing the inventive methods.

Furthermore, the invention comprises computer-readable storage media comprising program code for performing the inventive methods, when loaded into a computer system.

In the following, embodiments of the present invention are described in conjunction with the drawings, wherein:
- Fig. 1: illustrates a first embodiment of the present invention;
- Fig. 2: illustrates, by way of example, a screen print of a TSDM application;
- Fig. 3: illustrates the order document hierarchy as applied in the second embodiment of the present invention;
- Fig. 4: illustrates an overview of meta data objects according to the present invention;
- Figs. 5-8: illustrate, by way of example, screen shots of software systems which implement the method according to the second embodiment;
- Fig. 9: illustrates the data structure of order core components;
- Fig. 10: illustrates the data structure of a reference table;
- Fig. 11: illustrates the data structure of mapping;
- Fig. 12: illustrates the data structure of an extension;
- Fig. 13: illustrates the data structure of a partner extension;
- Fig. 14: illustrates the data structure of a time stamp;
- Fig. 15: illustrates the order type definition;
- Fig. 16: illustrates the order data type definition; and
- Fig. 17: illustrates the order data area definition.

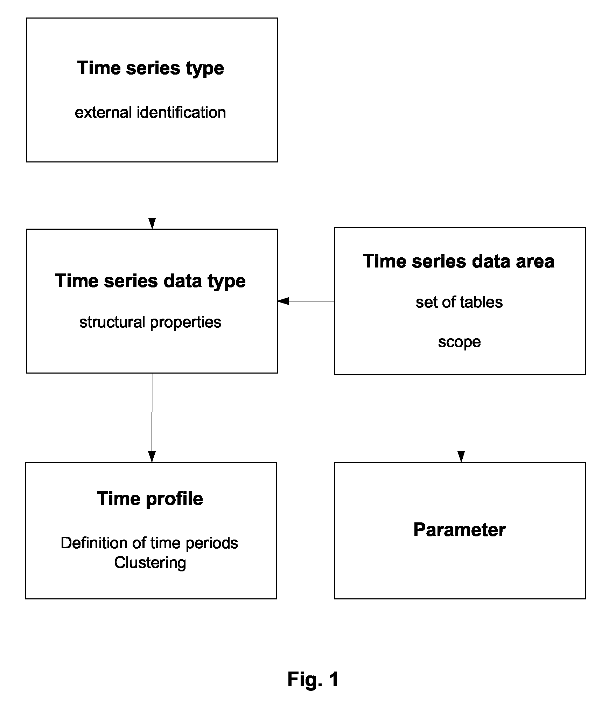

Fig. 1 shows a first embodiment of the present invention, used with a supply chain management (SCM) application (SAP mySAP SCM). The data management module used to store and retrieve time series data is referred to as Time Series Data Management (TSDM).

For an SCM application, the TSDM supports location, product and version as basic characteristics. Other and additional characteristics and their data formats can be configured.

Time series data in TSDM can be stored in different versions to distinguish different views or status of a set of data. Within TSDM there are no semantic properties associated with individual versions. For SCM purposes versions might be used as planning versions.

Key figures, characteristics and their data formats can be freely defined. The TSDM is generic in the sense that it works independent of the semantics of characteristics and key figures.

The TSDM supports arbitrary definitions of sequences of time periods for which data can be stored. Each individual time period has a number as an identifier. Usually the defmitions of individual time periods are equidistant, but other definitions are possible. Typical time periods are hours, days, weeks, months, and years. Freely defined periods as well as multiples of elementary periods are possible.

It is also possible to use just the numbers as identifiers for an abstract series of key figure values without relationship to time.

In addition, each time series has one or several status, which are not a characteristic (key) but attributes. The status can e.g. be used to model valid and invalid status of data in a data staging process.

The TSDM also supports storage of pointers to documents from a document management service.

The Time Series Data Management is designed for high volume and high throughput scenarios. Two mechanisms contribute to fulfill this goal, namely clustering, and partitioning.

Clustering is especially for performance reasons. Hereby, key figure values are stored in clustered format with respect to the time dimension: This means that in the corresponding database tables, key figure values for different time periods are not separated by a an explicit key field that denotes the individual time period, but are stored in multiple adjacent table fields of the same table entry.

The clustering mechanism, i.e. the grouping of time series values for each characteristic combination and each key figure in one or a few table entries, limits the number of entries that need to be treated in each access to the database by a factor that corresponds to the cluster size.

### Clustering also reduces the data volume:

Memory requirement for each cluster is: K + S * V
Memory requirement for each key figure value is: K/S + V,
with V = length of key figure value field, K = length of key for each cluster, S = cluster size.

The value of K is relatively small, so that the data volume needed to store a key figure value approaches that of the size of the key figure value itself with increasing cluster size S.

Time periods, characteristic combinations and key figure values are normalized and stored in different tables. This distribution of data helps to reduce the overall data volume.

Clustering can be done according to various rules: One can group either a fixed number of key figure values in each entry of the database table. In this case the cluster size is arbitrary up to the limit imposed by the maximum width of database tables.

Or, one can group entries according to properties of larger time intervals, e.g. all individual periods of one week or one month. In this case a semantic relation between individual time periods and cluster time period gives the cluster size, e.g. 24 for hours in a day or between 28 and 31 for days in a month.

To tune performance, the clustering mechanism and the cluster size has to be chosen carefully to align it with the way that algorithms access the data. The trade-off is between reading too many entries and reading too large a data volume. Clustering makes sense only in scenarios where multiple key figure values are regularly read and written together. TSDM can also store data in un-clustered format.

One could also choose a dimension other than time for clustering and treat this dimension accordingly. However, for SCM applications, time wise clustering is generally beneficial, because data access is usually for many time periods.

Partitioning of data means to distribute time series data stored in TSDM by using multiple so-called time series data areas. Each time series data area is a set of tables that are used to manage a portion of the total volume of time series data. The distribution of data across data areas depends on conditions on the keys of the time series data, i.e. the characteristics.

The introduction of time series data areas allows limiting the amount of data that has to be stored in individual tables. Since time series data areas do not require manual coding but are generated, and because they are hidden from the applications that use TSDM, they can be introduced by consultants/administrators after the setup of a system at the customer site to improve performance.

The time series data is split according to configurable conditions on the characteristic values, i.e. all possible characteristics combinations are split into subsets each with their own data area. Beyond reducing the amount of data in tables to manageable size, one can align the split with the way that algorithms access the data in order to further improve performance, e.g. defining separate data areas for individual locations if an algorithm computes for one location at a time.

For large data volumes this split into multiple data areas greatly improves performance, while for small data volumes a multitude of tables that need to be accessed sequentially might lead to worse performance.

The clustering and data area mechanisms are hidden from the applications that use the TSDM. The APIs of the TSDM are independent of these features.

The TSDM provides a mechanism to log changes to key figure values. This historical data is stored in separate tables. Whether historical versions of data need to be stored can be configured or determined by the application on a case-by-case basis through the APIs of the TSDM.

The time series type models a group of time series as a single business object that is used externally by applications to specify the specific class of time series data they want to access. Further, the time series type specifies the time series data type that is an TSDM internal object giving the structure of the particular time series data.

The time series data type models the technical properties and structure of a set of time series, and specifies characteristics, key figures and a time profile. Further, the time series data type specifies the structural properties of the data storage for the related time series data areas, in particular the structure of the database tables for key figure values, characteristics, states, notes and history data. Time series data types are hidden from the application; only the time series type is relevant for data access.

The time series data area specifies a set of tables to be used for storage of time series of a particular time series data type. Multiple time series data areas can be used to partition large amounts of data into several sets of tables. By design, the scope of a time series data area is always limited by the corresponding time series data type, which describes its technical structure. The validity of a time series data area can be limited to specific time series types and specific characteristic values or characteristic value combinations.

In the same way as the time series data types, time series data areas are hidden from the application.

The time profile defines granularity, start and end of a sequence of time periods and the properties of the clustering mechanism.

A parameter defines name and technical properties of a key figure or characteristic for TSDM. Parameters are also used in other SCM data management components and are a unifying element for the description of corresponding algorithms and user interfaces. Parameters serve as an abstraction from technical data properties while providing some additional meta-attributes.

Time profiles, time series data types and time series data areas each exist in an inactive version that describes their definition and in an active version that reflects the currently used state of the definition. Activation of these meta-data objects generates corresponding code and data structures and copies the relevant table entries from the inactive version (definition) into the active version (run-time usage).

The TSDM provides an API for the following functions:
- Create/ change time series data;
- Read time series data by time series type, selection of characteristics, key figures and time;
- Read time series history by time series type, selection of characteristics, key figures and time;
- Delete time series data by time series type, selection of characteristics, key figures and time.
- Delete time series history by time series type, selection of characteristics, key figures and time;
- Create and activate time series data areas. This is used by an application when introducing new characteristic combinations that should have their data stored separately for performance reasons

All functions are suited for access of multiple time series across characteristic combinations and key figures, while the time series type is fixed. TSDM allows reading of data in time series format from external applications through special APIs, e.g. the SCM Order Data Management: the Order Data Management provides a special API to read quantities in aggregated format.

The TSDM has user interfaces for the following configuration tasks:
- Maintain time series type;
- Maintain time series data type;
- Maintain time series time profile;
- Maintain time series data area;
- Activate time series profile;
- Activate time series data type;
- Activate time series data area.
- Copy data between time series data areas in order to introduce new time series data areas when data is already present

By way of example, the following time series types are provided in a typical SCM application:
- Demand, In-Transits with daily time periods;
- Forecasting key figures with daily and weekly time periods.

Users may build a multitude of time series types for various planning situations.

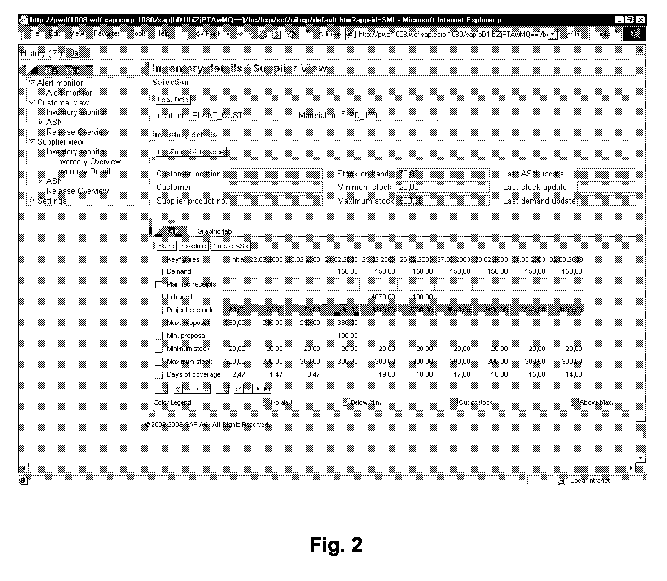

Fig. 2 shows data stored in TSDM in the context of an Inventory Collaboration Hub (my SAP SCM ICH) front end-application. The screen shows data for an exemplary plant (PLANT_CUST1). The figures represent the planning for the item denoted PD_100 over the time. The time period of the time series is one day. The key figures in this example are: Demand; In-Transit; Max. Proposal; Min. Proposal; Maximum Stock; Minimum Stock; Days of Coverage.

In the following, a second embodiment of the present invention is described, referred to as object data management (ODM).

Order documents that are managed by the inventive ODM are preferably logistic order documents, i.e. order documents that describe the movement of products or associated services. However, the concept of an order document in ODM is very general.

In the context of ODM, an order document is any hierarchical object that is made up of a one-level, two-level or three-level core with 1:n relationships among the core components and extensions. IDs or numbers function as keys of the core hierarchy. Within ODM, both core and extension components can be freely defined to contain arbitrary sets of fields.

Order documents can be selected according to flexible criteria that can involve fields of any of the core components and extensions.

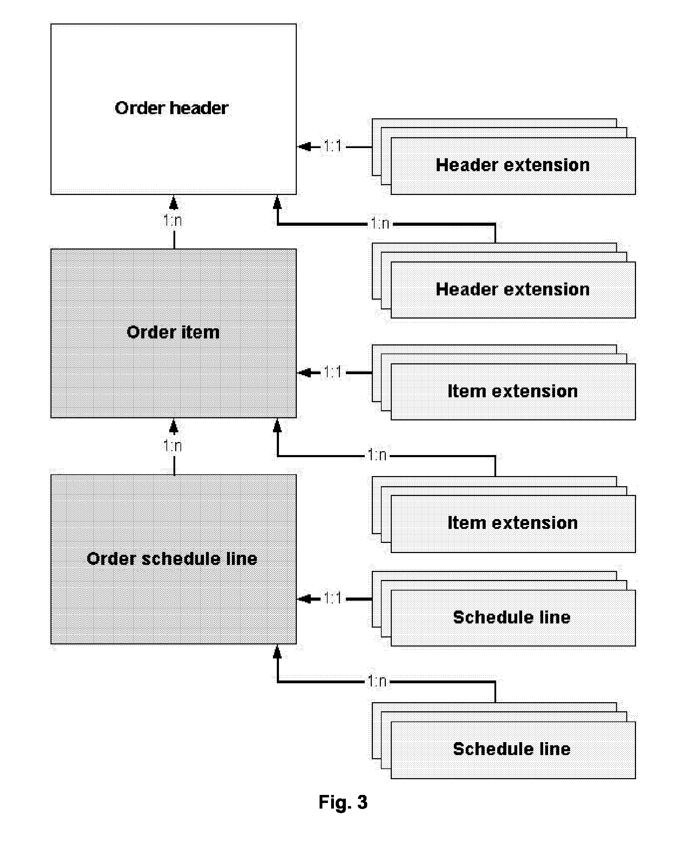

In this way, ODM is a generic data management module for hierarchical objects. Fig. 3 illustrates the hierarchy of the objects which model order documents. As can be seen from Fig. 3, on the top is the order header component, optionally followed by an order item component and optionally by an order schedule line component. Each of the components may have extension components.

The central constituents of an order document are denoted core components. They model order header, items or schedule lines. The ODM supports different structural types of order documents with different hierarchy levels.

The core of single-level order data types is build out of a header only. The core of two-level order data types is build out of header and item component. For logistic order documents, items usually describe quantities and time stamps. The core of three-level order data types is built out of header, item and schedule line component. For logistic orders, items usually describe product(s) and location(s) and schedule lines quantities and the time stamps. It is to be noted that the present invention is not limited to three levels. The core hierarchy can be extended to further hierarchy levels.

Optional parts of an order document are denoted extensions. They are in addition to and related to the core components. An extension is a grouping of several attributes (fields) relevant for a theme into one component. The definition of the theme is usually relatively broad to limit the number of extensions and hence the number of tables needed to store a corresponding order document (in order to improve the performance). On the other hand, data that is often not required when reading an order document should be stored in separate extensions to minimize the amount of data that needs to be accessed.

An extension is assigned to one of the core components (header, item, schedule line) in a l:l or l:n relationship. Each entry in an extension table is assigned to exactly one core component entity (header, item, schedule line). For a 1:n relationship between core component and extension, the extension needs one or several additional key fields to separate the corresponding entries. Extensions themselves and the extensions that are supported for a given order data type can be configured. Technically, any extension can be assigned to any order data type.

The order document header is, as described above, one of the core components of an order document. It is situated on the top level. Each order document has only one header that stores central information.

The order document item is also one of the core components of an order document, as described above. It is situated on the second level. Each order may have any number of order document items. Order document items are related to order document headers in a l:n relationship.

The order document schedule line is one of the core components of a three level order document. Each order document may have any number of order document schedule lines. Order document schedule lines are related to order document items in a l:n relationship.

References represent relationships between different order documents and can be stored in specific reference tables of the ODM. More specifically, references can store links between core components (header, item, schedule line) of the same or different order documents.

A reference can connect components of any level with any other level. There can be any number of references from one component to any other components. References build N:M relationships between components. Each pair of components can be linked in multiple ways that are distinguished by the reference type. ODM allows selecting referenced and referencing orders. Within a supply chain management (SCM) context, this is for example used by fulfillment coordination control objects that groups several schedule lines of sales orders or similar order documents together to coordinate their delivery process.

Mapping denotes the function to associate external readable numbers for an order document header, item or schedule line with internally used IDs. Any order document can have several external numbers at any level. These numbers need to be differentiated by a partner ID or logical system ID. This mapping is independent of versions, i.e. version is not a key field of the corresponding tables.

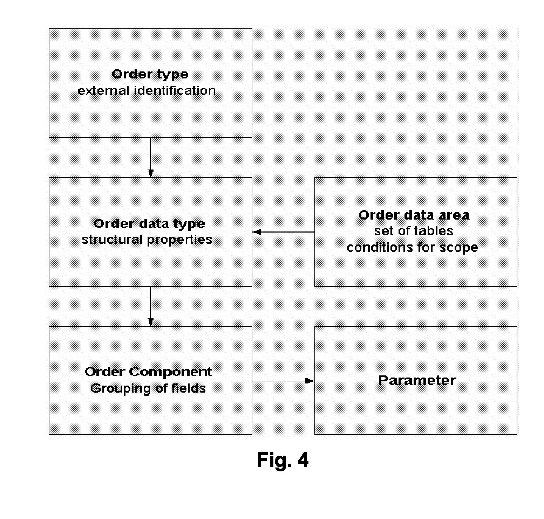

With reference to Fig. 4, the data objects are described which are used to configure the Order Data Management. The arrows between these meta-data objects represent the relationship that the source uses the target in its definition.

Order documents are used in different business contexts. The order document type is the corresponding object that is used by applications to identify a class of order documents.

The order data type describes the structural and technical properties of a set of order document types. The order data type specifies number of levels, core components and extensions.

Order data types can be used to define single-level, two-level and three-level order documents: For SCM applications, order documents are usually composed of header and items (two-level order type) or header, items and schedule lines (three-level order type) and describe partners, locations, products, quantities and times for the movement of physical objects. Order data types are hidden from applications that use ODM. The order data type describes the structure of the tables that are necessary to store corresponding order document data, but does not specify the data base tables themselves.

For this purpose, the concept of order data areas is introduced: Each order data area specifies a set of tables to be used for storage of order documents of a particular order data type. By design, the scope of an order data area is always limited by the corresponding order data type. Multiple order data areas can be used to partition large amounts of data into several sets of tables in order to enhance performance. The distribution of data across data areas is done according to configurable conditions on the order content, so that orders that are usually accessed together are stored in the same set of tables. It is also possible to store several order document types with the same order data type in one set of tables, so that reading across these order document types might be simplified and performance improved.

As a simple example, it is possible to store the active version in one set of tables and all other versions together in another set. Alternatively each version and data for each location could be stored in its own set of tables. Order data areas are hidden from applications that use ODM.

Order components are objects that describe the definition of the parts of an order document, i.e. core and extensions, in particular the corresponding structures, fields and keys. These structures are also used in the interfaces of the ODM.

For each component one defines the levels of an order document it is associated with. One also needs to specify whether the component has a l:l or a l:n relationship to the corresponding core component and in the latter case the corresponding key fields.

It should be noted that order components, order data types and order data areas exist in an inactive version that describes their definition and in an active version that reflects the currently used state of the definition. Activation of these meta-data objects generates corresponding code and data structures and copies the relevant table entries from the defming inactive version into the active version.

The ODM has user interfaces for the following configuration tasks:
Maintain order type;
Maintain order data type;
Maintain order component;
Maintain order data area;
Activate order component;
Activate order data type;
Activate order data area.

The introduction of order data areas helps to limit the number of entries in individual order tables. The partitioning can simply be done according to order document type and version, but more complex partitioning schemes, e.g. according to partners, products or locations can be used to further limit the amount of data for each table. This can be used to increase performance for very high volume scenarios.

Since the functionality of order data areas is hidden within ODM, they can be introduced to improve performance without influencing the applications that are using ODM.

In one embodiment, which is the SCM application provided by SAP Aktiengesellschaft, Walldorf, Germany, the following order document types are provided:
Delivery (two-level order);
Delivery schedule release (three-level order);
Stock transfer order for distribution planning (three-level order);
Transport load building order (two-level order).

The following Figures illustrate screens shots of objects that are stored in ODM. The screens themselves are not part of ODM.

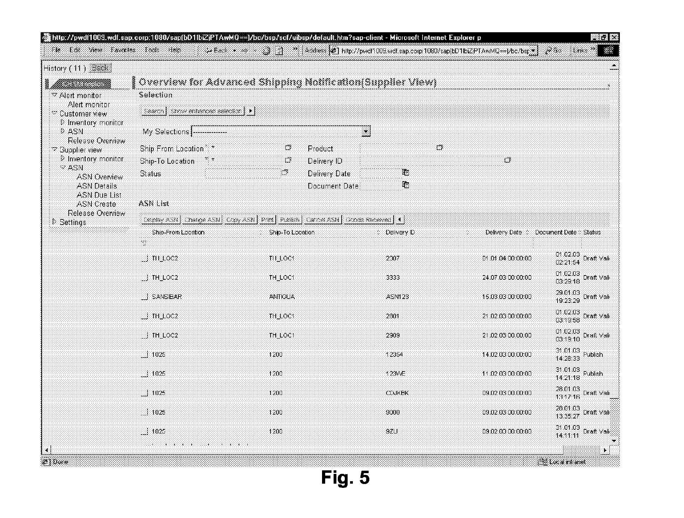

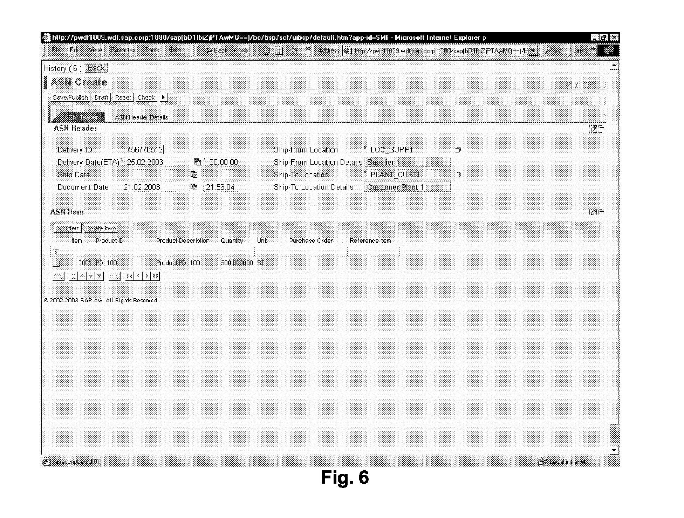

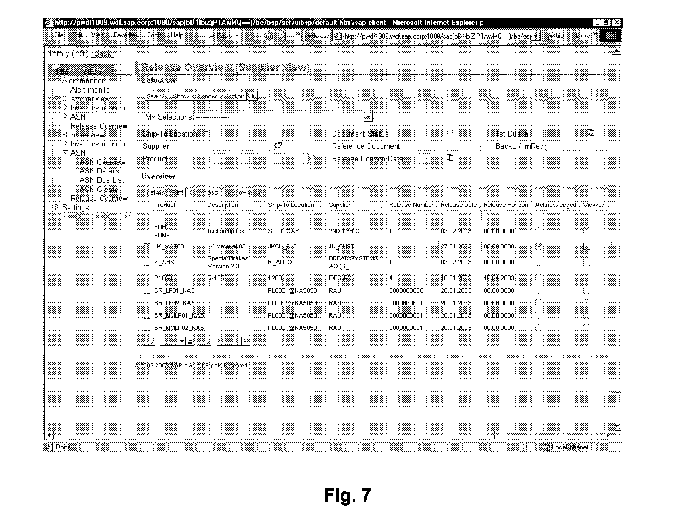

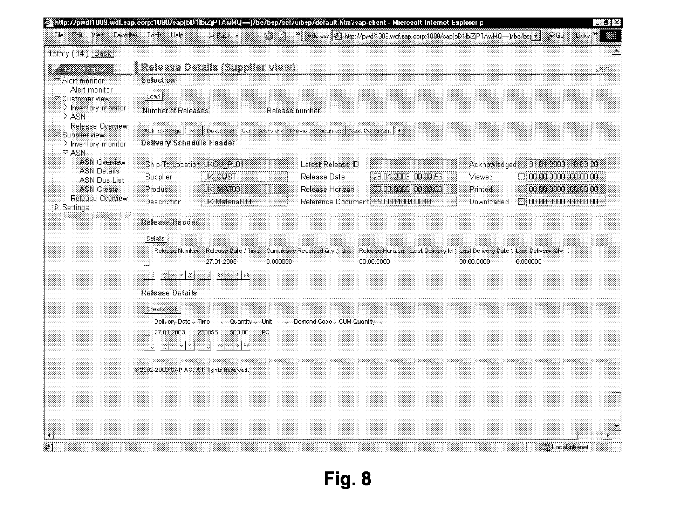

Figs. 5-8 illustrate screen shots of a software application which uses the inventive ODM.

In the following, examples for data that are stored in order documents are given. These examples focus on logistic orders documents.

Partner and location data are usually stored at header and/or item level as partner/location from and partner/location to. Where the different partner and locations are stored and how the different values are used, is defined by the order data type.

For SCM applications, quantities are usually stored within the order document item (for 2-level order data type) or within the order document schedule line (for 3-level order data type).

For SCM applications, the ODM stores time information as time stamps or time periods. A time stamp is the combination of date and time. Every time stamp is accompanied by a time zone. The time periods are built out of two time stamps with a single time zone.

For SCM orders, usually two time periods are stored in the core item table. The order data type determines the meaning of these time stamps. Further time periods might be stored in time extensions. To identify the meaning of an additional time period in an extension table an additional qualifier is used.

In the following, the data base tables used for storing the different kinds of orders are described in more detail.

The data base tables, in which the order data is stored, can be separated into two groups: For most order types the structure of the component tables for header, item and schedule line are the same. This constitutes the core of the order. The fields of these core components are restricted: they contain general fields, which are independent of order type and are used by all or the most order types. Depending on the level-type, there exist two different types of the core component "order item". Additional data, which is only necessary for one or some order types, is stored in extensions, e.g. if only one order type needs transportation information.

In one example, the ODM supports three different structural types of orders with one, two or three hierarchy levels. Which type of order structure will be used depends on the order data type and is specified by the so-called level-type.

The core of two-level order data type is build out of header and item component. Here, the item component contains the quantity and the time stamp. This order type can handle only one quantity with one time for each item. However, several aspects of the same physical object can be stored in this item (e.g. quantity and gross quantity). The number of possibilities is given by the item component and its extensions and depends on the existing quantity columns.

The core of three-level order data type is build out of header, item and schedule line component. The item component contains product and location(s) and the schedule line component quantities and the time stamps.

For several representations of a single physical quantity or in the case of requested and confirmed quantities, several schedule lines for one item are used. Within such a set of schedule lines, the schedule line type distinguishes individual schedule lines.

Fields that are not necessary for every order type or every application are stored in extensions. An extension is a special type of component, used in addition to the core components. Extensions group several fields of one theme (e.g. transportation planning). The grouping of the field should be rough, to minimize the amount of additional tables, because the number of tables influences the performance of reading or writing an order. The extensions supported for a given order type depend on the associated order data type. They can be set up in the configuration of the order data type (which is assigned to the order type). Technically any extension can be assigned to any order data type. While extensions data base tables could be assigned to multiple core components of an order, every instance of an extension is assigned to only one component. So, an extension entry related to a schedule line, could not be related to an item. A core component entity can have several entities of one extension (e.g. an item can have several partners, which are stored in one extension).

The extension is build out of two parts. The first part is the standard key, which is used for every extension. It is the ID of the order, the item and the schedule line and the version ID. The extension is related to the lowest filled part of this key. The ID's from higher levels are only used as a short cut to read the data. It is not allowed to use these fields to connect the extension to different entities or levels.

The second part of the extension is the 'pay load'. The fields of the extension are collected in one structure.

The associated order data type describes the structure of an order type. It models the technical properties and structure of a set of order types, and it specifies number of levels. Further, it specifies which tables need to be generated for each related order data area, core component tables, or extension tables.

Order data types are hidden from the application; only the order type is relevant for data access. The order data type describes the structure of the tables that are necessary to store corresponding order data, but does not specify the data base tables themselves. For the latter purpose, the concept of an order data area is introduced. It specifies a set of tables to be used for storage of time series of a particular order data type.

By design, the scope of an order data area is always limited by the corresponding order data type, which describes the structure of the tables. Order data areas are hidden from the application. Only the order type is relevant for data access. The activation of an order data area (re-)generates the corresponding set of tables.

Optionally, the validity of an order data area can be limited to specific order types and specific versions. Multiple order data areas can be used to partition large amounts of data into several sets of tables in order to enhance performance. The separation of the order data in different sets of tables by the version is optional.

It is also possible to store several order types with the same order data type in one set of tables, so that read access across these order types might be simplified and improved with regard to performance.

The structure of the different components is common for all order types. So, the structure of the header table and in general of all core components is the same for all order types. The same is valid for extensions: e.g. the structure of the extension 'transport' is the same for all order types that are using it.

To avoid inconsistencies the meaning of the content of components should be the same across all order types and applications, too. In that sense the components and in particular the extensions have a semantic meaning while within the ODM itself this meaning is not relevant.

Order data can be stored in several (planning) versions. For the ODM there are no semantic properties associated with individual versions. Instead it is just an additional key field for all order related tables. If a version of an order exists, the complete data of the order valid for a version has to be stored for this version. In other words, there is no mixture of order data of different versions within one order in the ODM.

Partner and location data can be stored at header and item level as partner/location from and partner/location to. Where the partner is stored and how the different values are used, is defined by the order data type (depending on the level where they are stored). For each order data type one can decide whether the partner and location fields on item level are used. The read access via partners or locations is executed accordingly. In more detail, there are two different mechanisms supported, Header Logic, and Defaulting-logic.

Header logic: The partner set at header level is valid for all items of the order. The ODM does not prohibit that the partners/locations can be set at the item level. But for all read access performed by the ODM the item partner/location values are ignored.

Defaulting-logic: The partner set at header level is also valid for the item level, if there is no partner defined there.

In addition to partner/location from and to, further partners and locations could occur in any number. These can be stored in special extensions that contain a "partner role" as key field.

To facilitate the reading of data from tables of order data areas that are used by multiple order types, the order type is part of all order tables.

Order header and order item each contain a single status field. The value of this status is defined by the applications and should contain a general, accumulated status value. Using appropriate extension structures one could configure additional fields that can be used as status by an application. The ODM does not perform any checks on status values, but allows selection only as for any other core or extension field. If more functionality associated with status fields should become necessary for an application, the central Basis status tool could be used.

ODM does not have its own order number assignment. If missing, Globally Unique Identifiers (GUIDs) as internal keys are created by ODM, but no readable order, item or schedule line numbers.

Mapping denotes the function to translate an external, readable number of an order, item or schedule line to the internal used GUIDs. The mapping is independent of versions, i.e. version is not a key field of the corresponding tables.

The mapping is stored on the lowest level of the order structure, i.e. there is a mapping of combinations of order and item number or order, item and schedule line number to the corresponding GUIDs for two-level and three-level orders respectively. These data can be used to map at any level (header, item, schedule line) of the order.

Any order can have several external numbers at any level. These numbers need to be differentiated by a partner ID or logical system ID.

Confirmation denotes here the answer specifying products, quantities, times and other details to a request described by an order. In principal, several possibilities exist to store confirmations:

Two different order types are used for request and confirmation. The request is stored in one order and the confirmation is stored in another order with another order type and hence in different tables.

Here, the request and the confirmation are explicitly separated. If for different tasks (or applications) only one type of quantity is used and the other type is ignored, no additional condition than the order type has to be checked to get only one type of quantity. An example would be to read quantities of one type only, e.g. to create a time series.

It is more complicated to connect or to combine the request with the confirmations than in the second possibility outlined below, because references span different tables. This connection is for example necessary to identify the open quantity (the difference between the confirmation and the request). The information is important for fulfillment coordination to trigger functions to plan additional supply.

The request and the confirmation is stored in the same order (only one order type is used).

Request and confirmations are always stored in the same table. The different types of the quantities need to be identified with a qualifier on the schedule line level.

For a new type of quantity only the qualifier of the schedule line would need to be expanded.

The requested and open quantities can be read and are always read in one step.

The reference between confirmation and request should be stored in the same table as the schedule lines themselves. The confirmation is linked with a reference field to the request.

A confirmation schedule line is connected with a request schedule line by a reference in the schedule line itself. This reference is restricted to the given order. This means that a schedule line can reference any other schedule line of the same order independent of the item but not across orders, at least not by this mechanism.

Request and confirmation could also be stored in different tables at the same order type. The quantities are clearly separated. It is easier to create a time series with quantities of one type only. For a new type of quantity a new table would need to be created. Request and confirmation are stored in the same table, but the two types of quantities are stored in different columns. This mechanism is not suited for references between orders and items other than l:l.

A time stamp is the combination of date and time. UTC is not necessarily true. In ODM, a field to store a corresponding time zone always accompanies a time stamp. The time zone is stored together with the time stamp to allow the UI display of the correct time, even if the corresponding location is not restorable.

Two time stamps are stored in the core item table. The order data type determines the meaning of these time stamps. Further time stamps can be stored in the time extension. To identify the time stamp in the extension table an additional qualifier is used.

References representing a hierarchy between different orders or process step dependent references can be stored in the reference tables of the ODM.

As an example, the logistical order or fulfillment order of fulfillment coordination makes use of this functionality. The fulfillment order exists only out of one header and has several references to schedule lines of other orders (of various types). If the fulfillment order or the schedule line is deleted also the relation is deleted and cannot be restored.

References between schedule lines, to store the relation between confirmation and request are stored in the schedule line itself. This reference information at schedule line level can be used to identify the hierarchy between items of the same order, too. This is similar to the mechanism used in R/3 or Advanced Planner and Optimizer (APO - a software product delivered by SAP) to represent the result of rules based Available-To-Promise (ATP - a software component delivered by SAP). In R/3 these items are named main item and sub item.

References between items of one or several order, independent from the confirmation, can be stored in the reference table as well.

In the following, the data model of the ODM is described in a rough manner. In the Figures, only the key fields and other important fields are shown. Mainly the relations between the different tables and the cardinality should be shown. Key fields are marked in the Figures with an asterisk (*). Tables that are not part of the described area, but necessary to understand the context, are displayed in gray. They are described in other sections of this chapter.

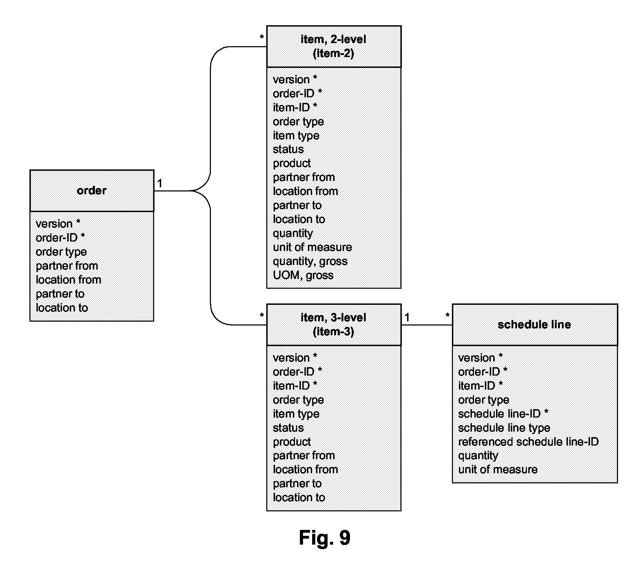

The order is stored in the ODM in two types of tables, as illustrated in Fig. 9. The core tables, whose structure is common for most order types, are header and - depending on level-type - either of two different items and optionally a schedule line. These tables represent core components. All other tables - specific to order type or application - are termed extensions. ODM also allows order data types with non-standard core components, but these are the exceptions among the order data types used for supply chain applications.

The ODM can handle order types with one, two or three levels. All orders of one order data type are stored in the same manner. As an example, if it is set up that the sales order is a three-level order, the table item-2 is not used, but only the tables item-3 and schedule line are used.

One has to keep in mind that the actual table instances depend on the order data area as explained above, so that strictly speaking we discuss the structure of tables and not the tables themselves in this section.

Both level-types use the same structure of the header table. Header and item tables contain time stamp and user of the last change. All parts of an order must have the same version. For example it is not allowed to combine the header with version A with an item with version B. Order IDs usually are the same across versions, a fact, which requires the preceding point.

There exists a central value table to define the possible values of the item type. The entries should correspond to the item types used in R/3 and Customer Relationship (CRM - a softare component delivered by SAP). This value list can be expanded. The entries can be used by an application for any order type: it is the task of the applications to avoid conflicts; the ODM does not perform any checks when creating or changing an order.

The 2-level order can have only one quantity. This quantity can have several representations (like gross quantity).

An example of an order type with this level-type is the delivery. It has only one quantity, which should be delivered.

The order ID would not be necessary on schedule line level, because it is redundant, doubling the information of the order ID in the item-3 table. It is added to the schedule line table to facilitate the reading of schedule lines of one order. Of course, it always has to be filled with the same order ID as the corresponding item of the schedule line.

There exists a central value table that defines the possible values of the schedule line type. This value list can be expanded. The entries can be used by any order type and application. It is the task of the applications to avoid conflicts.

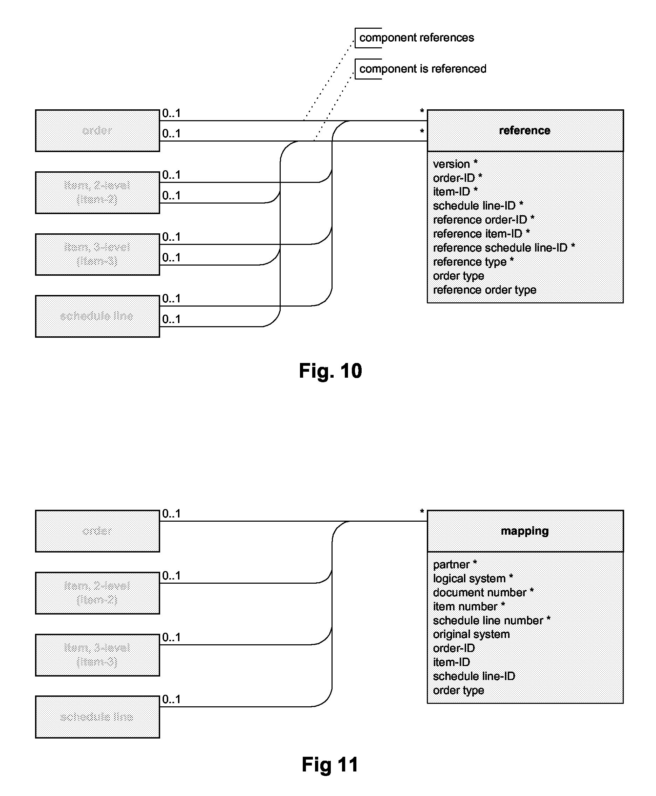

The reference table can be used to store links between components (header, item, schedule line) of the same or different orders and order types, as illustrated in Fig. 10.

This is for example used by the fulfillment order that groups several schedule lines of sales orders (or similar orders) together to coordinate their delivery process.

There can be any number of references from one component to any other components: references build n:m relationships between components. Each pair of components can be linked in multiple ways that are distinguished by the reference type. The reference has a reference type to describe the meaning or reason of the connection. A reference can connect components of any level with any other level. References are not restricted to connect components of the same order. References are stored in the way they are specified by the applications. In particular, references are stored with the orders that the application associates them with only. There is no logic within the ODM to double a reference for storage at referenced and referencing order. Usually, each relationship between components is stored only once by a single reference in ODM, unless the application decides to create two references. Zu detailliert

The read method of ODM reads all order data including the referenced component IDs; with a special, additional method it is possible to get all referencing orders. The component level (header, item, schedule line) to which a reference is assigned to is identified by the lowest filled ID value. For example, if an item-ID is filled, but not the corresponding schedule line ID, this represents a reference from or to an item. The combinations of component IDs in reference tables need to be consistent with the relationships of the components within the referencing and referenced orders.

Mapping denotes the functionality to translate external (readable) numbers or ID's to the internally used IDs. The ODM uses GUIDs to identify the components of orders. Mapping has the structure as illustrated in Fig Mapping.

Mapping entries are stored for the lowest level IDs of an order (i.e. header and item ID combinations for two-level orders and header, item and schedule line IDs for three-level orders), but these entries can also be used for a mapping on higher levels (i.e. on header level for two-level orders and on item level for three-level orders).

The size of the fields order number, item number and schedule line number can be different for different order data types, depending on the size of the number field for the specific orders, while the names of the fields are fixed to unify their access in the code. In the APIs of ODM fields of type string are used. Every order can have several external numbers, but only one per "system": Here partner ID and / or logical system define a "system".

The mapping table is filled according to the data provided by applications. It is supposed to be used in the following manner: For IDs of systems of the own company the partner ID can be empty, but the logical system field must be filled. For IDs of partners, the partner field must be filled, but logical system field can be empty. If the partner has several systems (which use different IDs for the same order), it becomes necessary to fill the logical system field, too.

The original system of the order is marked when the order is first created within ODM or as specified by an application. This flag can be used to determine the origin of an order.

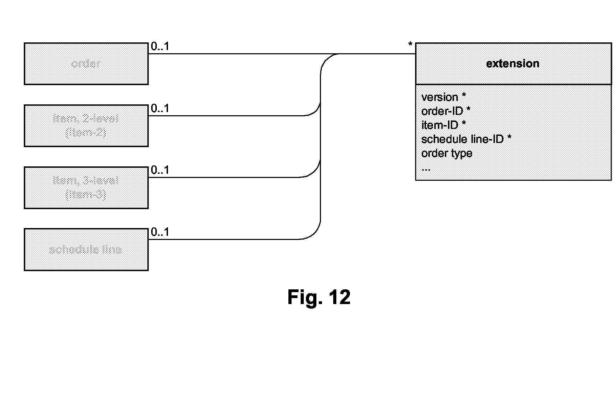

An extension is a grouping of several attributes (fields) relevant for a theme into one component, see Fig. 12. The definition of the theme should be relatively loose to reduce the number of extensions and hence the number of tables needed to store an order (in order to improve the performance). Any extension has the general structure as illustrated in Fig Extension.

An extension can be assigned to any and each of the core components (header, item, schedule line), while each entry in an extension table is assigned to exactly one core component entity (header, item, schedule line). An extension contains all ID fields for header, item and schedule line (if applicable) to improve the possibilities to select the extension data.

Looking at the entries in an extension, the core component (header, item, schedule line) that it is assigned to can be identified by the "lowest" filled ID field. For example, if the item-ID is filled, but not the schedule line ID, the extension entry has a reference to the corresponding item. For a 1:n relationship between core component and extension, the extension needs one or several additional key fields to separate the corresponding entries. These additional key fields cannot be created automatically by the ODM as the GUIDS for order header, item and schedule line. This means that the application has to deliver the necessary key values.

Extension tables are generated for each order data area and extension component upon activation of the order data area.

The core components of order header and order item can store only two partners each. Any additional partners will be stored in the extension, as illustrated in Fig. 11.

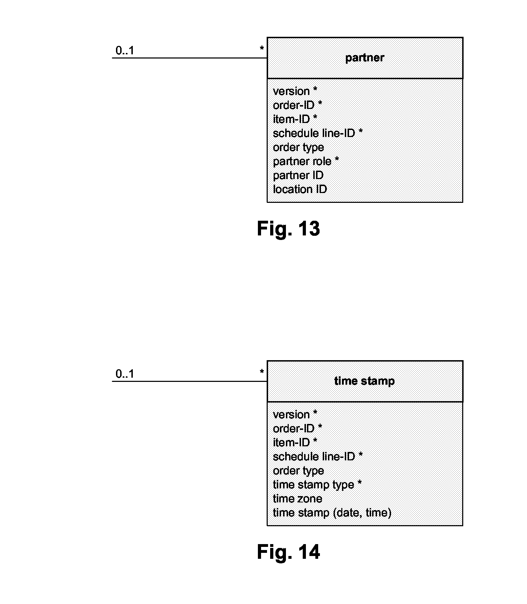

For each core component several additional partner entries can exist. The structure of a partner entry is given in Fig. 13. The different possible partners are identified by the partner role. For each partner role only one partner can exist.

The various possible partner roles are defined in the ODM in a customizing table. These values will be defined according to the partner roles in R/3, CRM, ICH (Inventory Collabaration Hub - a software product delivered by SAP) and APO. However, the ODM does not check against this value list and applications can freely use the partner role field.

The core components of order header, order item, and order schedule line can store only two time stamps each. Any additional time stamps will be stored in the extension as illustrated in Fig. 14.

For each core component several additional time stamps can exist. Their time stamp type identifies the different possible time stamps. For each time stamp type only one time stamp can exist.

Possible time stamp types are defined e.g. in the scheduling function of the SCM-Basis.

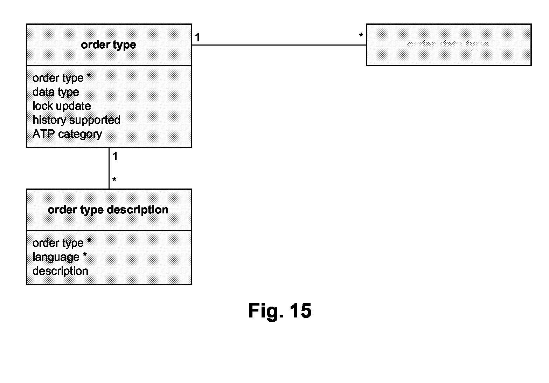

The tables according to Fig. 15 to 17 are used to describe how the data of an order type is stored in the data base.

This meta data information can be used to implement e.g. macro functions or other general functions and UI applications. It is also used to generate new tables for new order types and the corresponding code for data access; new order types can be created out of existing core components and extensions.

Order types are defined by the tables, as illustrated in Fig. 15. Every order type has a readable, language dependent description, which can be used in user interfaces. Every order type must have an order data type and can have only one order data type. The order data type describes the structure of the order data. With the field *lock update* one can decide whether orders of the given order type are not locked against other transactions when creating or changing them. If locking is switched off (out of performance reasons), a conflict between two parallel transactions creating or changing the same order can occur. For creation the order would exist twice, while for change the transaction finishing last will override the previous changes that will be lost.

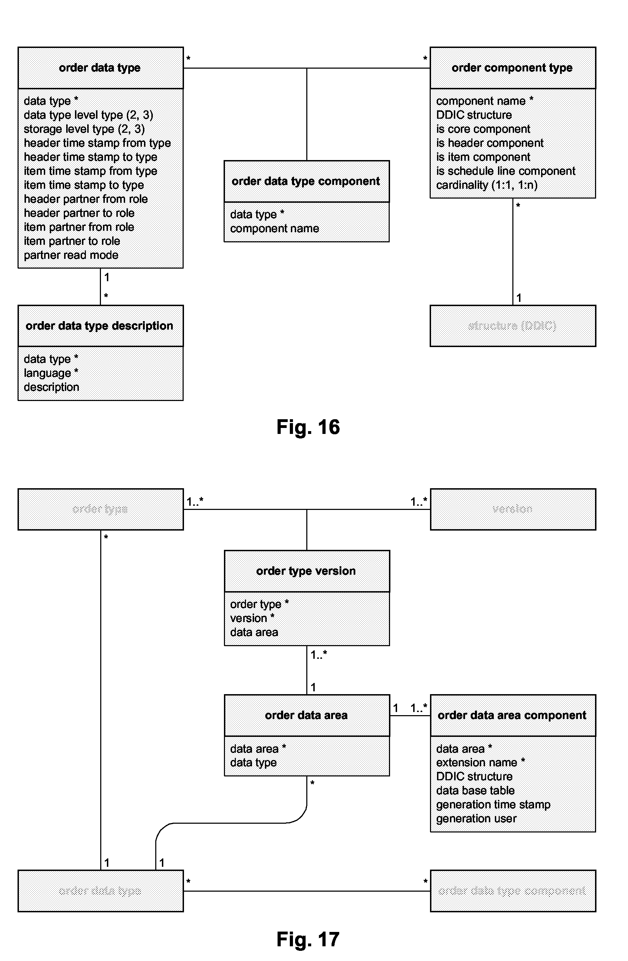

In the following, the structure of the order and how the information of the order is stored, is given. An order type specifies a single order data type, while several order types can use a given order data type. The order data type describes the structure of the data of an order, as illustrated in Fig. 16.

Every order document type and order data type has a readable, language dependent description, which can be used in user interfaces.

The field data type level-type defines the number of levels of the corresponding orders. There are one-level, two-level and three-level orders. The storage level-type defines, on how many levels the order is stored in the data base.

On default, the storage level-type has the same value as the data type level-type. The storage level-type could only be smaller than or equal to the data type level-type. A three-level order (data type level-type could be stored in a three-level or two-level data model (storage level-type).

If a three-level order were stored with a special two-level data model, the information of the item and the schedule line would be combined in one table: for each schedule line the information represented by the fields of the item would be repeated. If the relationship between item and schedule line entries is near to l:l, this could improve performance by using one table less.

In the first release of ODM, the storage level has always the same value as the data level. In particular, it is not supported, that a three-level order can be stored in special two-level tables.

Depending on the storage level-type the item (and the schedule line) is stored in tables of two different structures (item-2 or item-3). The schedule line component is used for three-level orders only.

The time stamp types define which time stamps are directly stored in the core components. If these time stamp types are used to select orders, the performance of the selection is better than for time stamp types stored in the extension. Only two time stamps are supported in the core components for this direct access. All other time stamps are stored in the extension.

The partner roles define which partner/location data are directly stored in the core components. If these partner roles are used to select orders, the performance of the selection is better than for partner roles stored in the extension. Only two partner roles are supported for this direct access. All other partner roles are stored in the extension Partner.

The partner read mode defines if the partner and location data of the header component is used exclusively or if it could be overwritten by partner and location data that is specified at the item level of an order. If the partner and location fields of the header are exclusively used, the partner roles specified for the item are irrelevant.

The table order data type component contains all extensions, which are supported by the order data type including the header, item and schedule line components.

All components, which are supported by the ODM, are collected in the table order component.

For each component one can define with three flags the levels of an order it is associated with. Core components can be assigned to only one level; extensions can be assigned to one, two or three core levels.

With the field cardinality it is possible to define the relationship between extension entries and core component entries. As described above, any particular extension entry can be assigned to only one core component entry, but more than one entry of an extension could be assigned to a single core component entry if the extension has a l:n relationship.

In the following, the tables are described in which the order data are stored. This information is used in the order access methods to find an order's tables depending on the order type and version.

With the tables illustrated in Fig. 17, the order data area defines, in which set of tables the data of an order is to be stored.

All order types that use the same order data type can be stored in the same order data area. But the data can also be partitioned to be stored in different sets of tables according to order type and / or version. For example, it is possible to store the active version exclusive in one set and all other versions together in another set of tables. Or each version could be stored in its own set of tables.

The tables to store order data are generated, if the corresponding order data area is activated. An order data area is specific to an order data type; it can be assigned to specific order type(s) and version(s). The tables are generated according to the structures assigned to the components and extensions of the order data type. If an order data area is activated and the corresponding tables are generated, these structures are also copied to the generation namespace. These copied structures are used in the interfaces of the methods of the ODM. Because of this, the ODM is independent from changes in the template structures, which are used in the order data type. The structures can be changed without disturbing the ODM.

The activation report for order data areas can compare the definition of the order type with previously existing tables by comparing the order data type structures and the copied working structures. If possible, missing parts will be added to the tables in the generation process to conserve the content of the existing tables.

An extension cannot be removed from an order data type, if any of the data base tables of this extension are not empty.

Only active order data areas can be used for data access, because otherwise the correspondence of order component structures and generated tables cannot be guaranteed.

In an advanced solution the de-activation is forced by changes to the order components. (Re-)activation of an order data area (re-)generates the tables according to the (new) definition of the order components. With this process, data might be lost and corresponding warnings need to be given to the user when changing the order component and re-activating the order data areas.

In this context, the activation code compares the time stamps of last activation for a table of an order data area with the ones for the corresponding order component's structure to find out whether the table needs to be re-generated. Furthermore, the activation code can also evaluate whether fields have been added to the structure or removed (by comparing it with the copied structure). In the latter case, the re-activation might cause a loss of data.

All methods of the ODM that process orders are able to handle one or several orders. Each method call handles orders of a single version only; it is not possible to mix order data of several versions in one call.

GET-methods are used to read order data from the ODM. Several methods of this type are supported. The orders can be selected specifying IDs, references or selection criteria.

In each case the order type has to be specified. For the selection of the orders by selection criteria one can define access paths that allow selection on any combination of fields in the order's core and extension components. For simple standard selections involving the core components only, no access paths need to be defined.

It can be specified which parts (core components and extensions) of the order should be read with a GET method call. All other parts will not be read to increase performance.

It can be specified, that all orders that have been read be locked automatically for a following change of the orders. If not all orders could be locked, a list of the not locked orders will be provided. This will not influence the result of the method call.

The SET-method is used to create or change order data in the ODM. It can also be used to delete individual items of an order. If a header entry is being deleted it will call an appropriate DELETE method. The SET-method (in case of creating the order) can be called with several external, readable numbers per one order. One of these external representations has to be marked as the one from the original system. It is not necessary that the order is read or locked before it is changed.

It can be specified that orders are not be locked when they are created or changed. The locking can be switched of in the SET method or at order type. If at one of both places the locking is switched off, the order will not be locked.

Normally the order is locked with the internal GUID. If the order is created, additionally the external number of the original system will be used for locking. This locking with the readable numbers is done on header level only, which is sufficient, because it is only used if the order is created.

The locking with GUIDs is done on item level. This latter type of locking is used in case the order is created and the GUID is provided from the calling application and in case an order or one item of an order is changed. Schedule lines are considered as a unit together with the corresponding items, so that they are locked together with the item.

If an order is not locked, it could happen that another, parallel transaction can change the same order in another manner. The transaction that finishes last (COMMIT WORK) will fmalize its changes. All other parallel changes are lost.

It is possible to change only parts of the order. Only those components that are transferred to the method are changed on the data base. Each transferred part has to be completely specified; components that are not specified remain unchanged.

The internal keys of the components (header, item, schedule line) can be predefined by the application (flag in API). In this case they have to be delivered to the SET-method at the creation of a new order. They need to be globally unique keys. This way it becomes possible that the application connects parts of the orders with own data without the need to create an own mapping between different internal keys.

DELETE-methods are used to delete the order data from the ODM. Two methods of this type are supported: orders can be deleted by ID or by selection criteria. In each case the order type has to be specified. Usually, the version has to be specified, too. With an additional parameter it can be defined, that the order should be deleted in all versions.

For the selection of the orders by selection criteria only attributes of the core components, partner extensions and time extensions can be used for selection: orders can be selected by partner, location, product and time stamp. There is no restriction on the combination of these attributes. Any role of partner and any type of time stamp can be used in the selection.

Also, parts of the orders can be deleted. It is possible to delete only one item of the order. All dependent parts (extensions and schedule lines) will be deleted automatically. Also the references of this item and their schedule lines will be deleted.

Referencing entries (in other orders than the deleted one) will not be deleted automatically, but need to be identified with a special method first. This is not done out of performance reasons in order not to have to search all order data areas for references to an order that is to be deleted

It can be specified that all selected orders be locked automatically for a following deletion of the orders. If not all orders could be locked, a list of the not locked orders will be provided. Only the locked orders will be deleted.

The ODM provides a buffer of configuration data, which contains the definitions of order types, order data types and order data areas. To buffer this data independent from the transaction, the data is buffered using shared objects If the buffer content is invalid (the time stamp is expired), the configuration data is reread from data base into the buffer.

The methods of the ODM can be called by various applications to create, read, change and delete the orders. Orders can be received or send via XML messages from other systems. The necessary inbound and outbound processing functionality is part of the Business Object Layer (BOL) and B2B Interface Layer.

The present techniques can be implemented in digital electronic circuitry, or in computer hardware, firmware, software, or in combinations of them. Apparatus of the invention can be implemented in a computer program product tangibly embodied in a machine-readable storage device for execution by a programmable processor. Method steps according to the invention can be performed by a programmable processor executing a program of instructions to perform functions of the invention by operating on the basis of input data, and by generating output data. The invention may be implemented in one or several computer programs that are executable in a programmable system, which includes at least one programmable processor coupled to receive data from, and transmit data to, a storage system, at least one input device, and at least one output device, respectively. Computer programs may be implemented in a high-level or object-oriented programming language, and/or in assembly or machine code. The language or code can be a compiled or interpreted language or code. Processors may include general and special purpose microprocessors. A processor receives instructions and data from memories, in particular from read-only memories and7or random access memories. A computer may include one or more mass storage devices for storing data; such devices may include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing can be supplemented by or incorporated in ASICs (application-specific integrated circuits).

To provide for interaction with a user, the invention can be implemented on a computer system having a display device such as a monitor or LCD screen for displaying information to the user and a keyboard and a pointing device such as a mouse or a trackball by which the user can provide input to the computer system. The computer system can be programmed to provide a graphical or text user interface through which computer programs interact with users.

A computer may include a processor, memory coupled to the processor, a hard drive controller, a video controller and an input/output controller coupled to the processor by a processor bus. The hard drive controller is coupled to a hard disk drive suitable for storing executable computer programs, including programs embodying the present technique. The I/O controller is coupled by means of an I/O bus to an I/O interface. The I/O interface receives and transmits in analogue or digital form over at least one communication link. Such a communication link may be a serial link, a parallel link, local area network, or wireless link (e.g. an RF communication link). A display is coupled to an interface, which is coupled to an I/O bus. A keyboard and pointing device are also coupled to the I/O bus. Alternatively, separate buses may be used for the keyboard pointing device and I/O interface.

## Claims

1. A method of storing data in a database, wherein the data, whose structures are configurable, comprise a time series,
the time series comprising a set of key figure values of individual time periods, the key figure values being associated with a combination of parameter values,
wherein the set of key figure values is organized in a number of configurable clusters, the clusters being configured according to time aggregates, each time aggregate comprising a number of the individual time periods, respectively.

2. The method of claim 1, wherein values for several time periods are stored into adjacent fields of one entry.

3. The method of claim 1 or 2, wherein the numbers of individual time periods are selected according to semantic criteria.

4. The method of claim 3, wherein the numbers of individual time periods are selected according to numeric criteria.

5. The method of one of the preceding claims, wherein each time period has the same fixed length.

6. The method of one of the preceding claims, wherein each time period can be individually described by begin and end time.

7. The method of one of the preceding claims, wherein data which is related to each other is placed at the same location.

8. The method of one of the preceding claims, wherein the time series data is partitioned across a plurality of areas, each time series data area comprising a set of tables useful for managing a partition of the data.

9. The method of one of the preceding claims, further comprising: Storing pointers to predefined documents of a document management service in relation to time series data.

10. The method of one of the preceding claims, wherein changes to key figure values are logged in predefined tables.

11. The method of claim 10, wherein the tables are organized in a number of configurable clusters, and are partitioned across a plurality of areas.

12. A method of storing order document data in a data base, the order document data being coded as objects, each object being configurable so as to comprise a predetermined number of core components and a number of extensions,
the core components being configurable in their content, and being hierarchically ordered in a corresponding number of levels,
the core components being coded to comprise a header, at least one item and at least one schedule line, the header comprising central information about an order, and
the number of levels being at least 3, on the 1^{st} level being the header comprising business partner information, on the 2^{nd} level being the item comprising product information, on the 3^{rd} level being schedule line comprising order quantities and time stamp information.

13. The method of claim 12, wherein an extension being assigned to a core component, and comprising additional information relating to the component.

14. The method of claim 12 or 13, wherein the information comprised in an extension is organized in several parts, each part being linked with the corresponding core component.

15. The method of one of claims 12 to 14, wherein the configuration is performed in a modular way on the basis of core components and extensions.

16. A method of managing a data base for an industrial application,
the data being organized into business objects, wherein
the data is split into groups according to a configurable set of conditions, the conditions being based on semantic properties of the business objects, and
each of the groups of data is stored in a set of tables of the data base which is associated with a condition of the set of conditions.

17. The method of claim 16, wherein the set of conditions is based on the way how the business objects are accessed by an industrial application.

18. The method of claim 16 or 17, wherein the set of conditions is organized in a decision tree.

19. The method of one of claims 16 to 18, whereby the method is performed in a hidden manner to the industrial application.

20. A computer system for performing the method according to one of the preceding claims.

21. A computer-readable storage medium comprising program code for performing the method according to one of claims 1 to 20, when loaded into a computer system.
